**Europäisches Patentamt**

**European Patent Office**

**Office européen des brevets**

(19)

(11) Publication number: **0 082 802**
**B1**

(12) **EUROPEAN PATENT SPECIFICATION**

(45) Date of publication of patent specification: **17.02.88**

(51) Int. Cl.⁴: **C 04 B 7/44**, F 27 B 7/20

(21) Application number: **82730140.9**

(22) Date of filing: **29.11.82**

(54) Calcining apparatus for powdery materials.

(30) Priority: **04.12.81 JP 196105/81**
**04.12.81 JP 196106/81**
**04.12.81 JP 196107/81**
**04.12.81 JP 196108/81**
**04.12.81 JP 196104/81**

(43) Date of publication of application:
**29.06.83 Bulletin 83/26**

(45) Publication of the grant of the patent:
**17.02.88 Bulletin 88/07**

(84) Designated Contracting States:
**CH DE FR GB LI**

(56) References cited:
**DE-A-2 603 594**
**FR-A-2 250 423**
**FR-A-2 337 698**

(73) Proprietor: **MITSUBISHI JUKOGYO KABUSHIKI KAISHA**
**5-1, Marunouchi 2-chome Chiyoda-ku Tokyo 100 (JP)**

(73) Proprietor: **MITSUBISHI MINING & CEMENT CO., LTD.**
**5-1, Marunouchi 1-chome Chiyoda-ku Tokyo 100 (JP)**

(72) Inventor: **Hatano, Hirofumi**
**No. 1211, Oaza-Yobuno Kokuraminamiku Kitakyushu City Fukuoka Pref. (JP)**
Inventor: **Yamazaki, Masayasu**
**No. 1211, Oaza-Yobuno Kokuraminamiku Kitakyushu City Fukuoka Pref. (JP)**
Inventor: **Sasaki, Atsushi Hiroshima Shipyard & Eng. Works**
**Mitsubishi Jukogyo K.K. 6-22-3, Kanonshin-machi**
**Nishi-ku Hiroshima City Hiroshima (JP)**
Inventor: **Mikami, Keigo Hiroshima Shipyard & Eng. Works**
**Mitsubishi Jukogyo K.K. 6-22-4 Kanonshin-machi**
**Nishi-ku Hiroshima City Hiroshima Pref. (JP)**

Courier Press, Leamington Spa, England.

**0 082 802**

(72) Inventor: **Taoda, Kiyomichi Hiroshima Technical Institute**
**Mitsubishi Jukogyo K.K. 6-22-4, Kanonshin-machi**
**Nishi-ku Hiroshima City Hiroshima Pref. (JP)**
Inventor: **Murakami, Mitsuharu Hiroshima Technical Institute**
**Mitsubishi Jukogyo K.K. 6-22-4, Kanonshin-machi**
**Nishi-ku Hiroshima City Hiroshima (JP)**

(74) Representative: **Meissner, Peter E., Dipl.-Ing. et al**
**Herbertstrasse 22**
**D-1000 Berlin 33 (DE)**

## Description

The invention relates to a calcining apparatus for powdery material according to the pre-characterising portion of the claims.

The general concept of leading the powder material in series through two calcining devices and through at least one preheating device is known from ˙FR—A—23 37 698 and FR—A 22 50 423.

Examples of powdery materials to be calcined by the calcining apparatus according to this invention include cement materials, limestone, dolomite, magnesite and magnesium hydroxide, but the cement materials are most common.

The prevalent multi-stage suspension preheater is usually constituted by stacking a plurality of combinations each of which comprises a solid-gas separator and a riser, and the prevalent calcining kiln has a fuel feeding device and a fluidized bed.

As the calcining apparatus comprising a combination of the multi-stage suspension preheater and the calcining kiln, there are known an incorporated calcining kiln system, a separate calcining kiln gas combining system and a separate calcining kiln gas parallel flow system.

The calcining apparatus of the incorporated calcining kiln system has a calcining kiln, equipped with a fuel feeding device, which is incorporated in series between a rotary kiln and a multi-stage suspension preheater, whereby an exhaust gas from the rotary kiln is all caused to pass through the calcining kiln. Air necessary for combustion in the calcining kiln is generally introduced directly to the calcining kiln along a certain channel without calling at the rotary kiln, and is mixed with the exhaust gas from the rotary kiln in the calcining kiln.

The separate calcining kiln gas combining system has a calcining kiln, equipped with a fuel feeding device, which is disposed in parallel with and separately from a rotary kiln, whereby an exhaust gas from the calcining kiln and an exhaust gas from the rotary kiln are combined and then fed to the multi-stage suspension preheater. The separate calcining kiln gas parallel flow system above has a calcining kiln and a rotary kiln which are disposed in parallel with each other, and in this system, exhaust gases from these kilns are not to be combined.

In the case of the calcining apparatus of the incorporated calcining kiln system, the drive operation, particularly the operation of a non-steady state such as starting or stopping is advantageously simple and easy, but the consumption of a used fuel is appreciably great. In other words, according to the incorporated calcining kiln system, air and the exhaust gas from the rotary kiln are mixed, therefore the partial pressure of oxygen for the combustion is low, so that the combustion of the fuel is not smooth, and since the exhaust gas from the rotary kiln, the combustion gas from the calcining kiln and a gas generated by the calcination are all treated, the whole volume of the gases is too much. Thus, in order to obtain such a residence time as allows the calcination to proceed to an enough extent, the calcining kiln must be designed in a noticeably large form. For example, the amount of the gas in the incorporated calcining kiln system is about twice as much as that of the gas to be treated in the calcining kiln of the separate calcining kiln system, accordingly the former system requires twice or more as large the calcining kiln as the latter. Thus, a large space is to be occupied between the rotary kiln and the preheater, and it is inevitable that the preheater and a frame work for supporting the same must be constructed noticeably high.

In the case that coal the combustion rate of which is more lagging than petroleum is employed as the fuel for the calcining kiln, the incorporated calcining kiln system is further disadvantageous in point of the fuel consumption. In order to overcome this drawback, it is necessary to reduce a grain size of the coal extremely, but a great deal of powder will be required to grind the coal.

In contrast, according to the separate calcining kiln system, the partial pressure of oxygen in the combustion atmosphere of the calcining kiln is high, and the fuel is caused to burn promptly with the small amount of air on the upstream side of the calcining kiln in order to elevate a gas temperature, so that the temperature difference between the gas and the powdery material will be great, and the calcination can be thus noticeably accelerated. Further, the separate calcining kiln system is more excellent than thè incorporated calcining kiln system in that the former system can take a great residence time because of the calcination treatment being carried out at two stages, and the sensible heat of the exhaust gas from the rotary kiln can be utilized effectively in the calcination of the powdery material.

The separate calcining kiln gas parallel flow system mentioned above includes two manners which are different in channels for the powdery material. According to one of the two manners, the powdery material collected by a second solid-gas separator from the bottom of a multi-stage suspension preheater is fed to a gas duct disposed between the rotary kiln and the preheater, is then separated by the undermost solid-gas separator in the series on the rotary kiln side, is further fed to a separate calcining kiln, and is finally fed to the rotary kiln via the undermost solid gas separator in the series on the calcining kiln side. According to another of the two manners above, the powdery material collected by a second solid-gas separator from the bottom of a multistage suspension preheater is fed to the rotary kiln inversely via the separate calcining kiln and then a calcining area between the rotary kiln and the preheater. Both of these manners are scarcely different in the consumption of the fuel.

As be definite from the above, among the conventional calcining apparatuses in which the multi-stage suspension preheater and the calcining kiln are combined, the separate calcining system is excellent in point of calcining function.

Even the separate calcining system, however, is not sufficient yet in respects of the calcination level and the thermal efficiency of the powdery material. For example, in the case of the gas parallel flow system just described, there are unbalances of gas flow rate and heat between gas parallel flow paths. Additionally, even if it is intended to adjust the flow rate of the powdery materials passing through the gas flow paths, it is intricate to make adjustment so that the sensible heat carried by the exhaust gas from the preheater may be minimized.

On the other hand, as a matter to be taken into consideration other than the heat exchange and the calcining function, there is a problem of the re-carbonatation of the powdery material which is not separated by the solid-gas separator connected to the calcining kiln and is flowed back to the preheater with the gas. The higher the calcination degree of the powdery material, the less the collection efficiency of the solid-gas separator connected to the calcining kiln, and the higher the partial pressure of carbon dioxide in the gas, the more this re-carbonatation is liable to occur. Further, it should be noted that the peak of the re-carbonatation lies at a temperature of 750 to 800°C. Since the re-carbonatation is an exothermic reaction, the temperature of the gas on the upstream side in the preheater will be elevated, and the temperature of the exhaust gas on a downstream side will thus be elevated in order to lower the thermal efficiency. Therefore, the re-carbonatation should be inhibited as much as possible.

Now, reference will be made to experimental facts regarding the re-carbonatation of a calcined powdery limestone material which have been found by the inventors of this invention:

It has been experimentally confirmed that, for example, a rate index (r) of the re-carbonatation of a cement material which contains limestone in a proportion of about 80% is represented by formula (1) below:

$$r = K \frac{\dfrac{P_{CO_2}}{P^*_{CO_2}} - 1}{b\, P_{CO_2} + d} \qquad (1)$$

wherein

r: Rate index (−) of the re-carbonatation of the cement material

K: Constant (= 3.57);

$P_{CO_2}$: Partial pressure of carbon dioxide (atm);

$P^*_{CO_2}$: Equilibrium partial pressure (atm);

$$b = 4.289 \times 10^{-12} \exp \frac{61450}{1.987\,T};$$

$$d = 5.757 \times 10^{-9} \exp \frac{39506}{1.785\,T}; \text{ and}$$

T: Reaction temperature (°K).

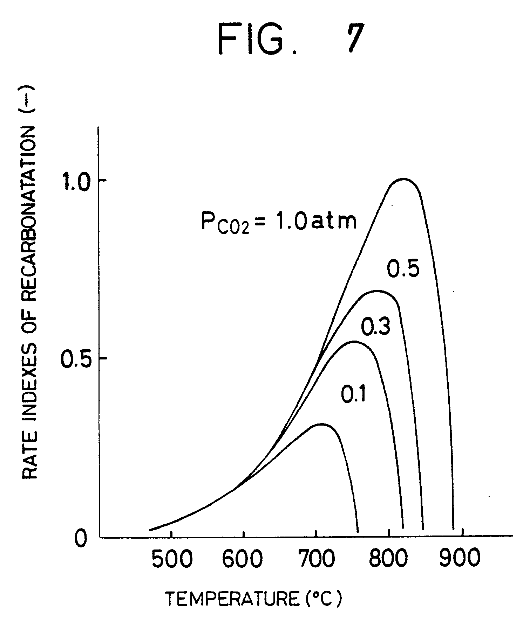

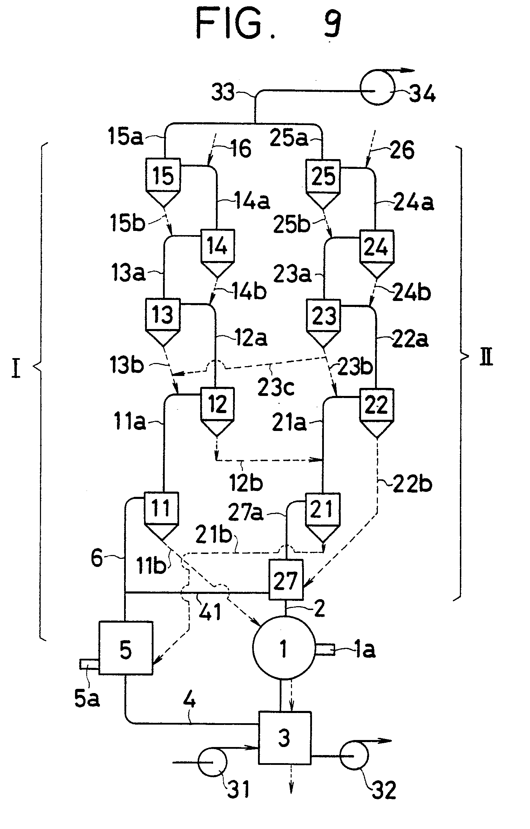

FIG. 7 attached hereto indicates that the higher the partial pressure $P_{CO_2}$ of carbon dioxide in each gas to be brought into contact with the cement material, the greater the rate indexes r of the re-carbonatation become, and peaks of the rate indexes transfer to the side of higher temperatures in FIG. 9. Moreover, in a temperature range on the right side of each curve in FIG. 7, there is a relationship of r < 0, therefore it is definite that the de-carboxylation reaction occurs in such a temperature range.

In the calcining apparatus of the separate calcining kiln system, the higher a combustion-improving ratio (a ratio of the amount of the fuel to be fed to the calcining kiln with respect to the amount of the fuel to be fed to the whole of the calcining apparatus), the more smoothly the calcination of the powdery material proceeds in a range expanding from the calcining kiln to the undermost solid-gas separator. Seeing that the calcination of the powdery material up to the undermost solid-gas separator on the side of the rotary kiln is small, the exhaust gas from the calcining kiln includes $CO_2$ generated from the fuel and additionally $CO_2$ separated from the material, and the concentration of $CO_2$ in the gas is high (about 40%), but the exhaust gas from the rotary kiln includes $CO_2$ from the fuel for the most part, and its concentration is low (about 20%). On the other hand, the temperature of the former exhaust gas is near to 900°C, and that of the latter is merely in slight excess of 800°C, therefore the troublesome re-carbonatation tends to occur on the side of the calcining kiln.

In the case of the incorporated calcining kiln system, the partial pressure of carbon dioxide at the exit of the calcining kiln is not changed by the combustion-improving ratio, but as compared with the separate calcining kiln gas combining system, the exhaust gas temperature is higher for the above reason. Consequently, the re-carbonatation of the powdery material flowed back with the gas is greater, and the temperature in the preheater is further elevated, thus it is definite that the incorporated calcining kiln system is poor in the thermal efficiency. The greater the above-mentioned combustion-improving ratio, the greater the difference in the thermal efficiency between both the systems becomes.

In the gas combining system including the separate calcining kiln, the amount of the gas in the calcining area between the rotary kiln and the preheater is the same as in the incorporated calcining kiln system, therefore the gas combining system is poorer in point of the residence time as compared with the gas parallel flow system including the separate calcining kiln in which the exhaust gas from the rotary kiln only passes therethrough.

In the case of the separate calcining kiln gas parallel flow system, mechanisms of the calcination and the re-carbonatation slightly vary with one manner of causing the powdery material discharged from the second solid-gas separator from the bottom of the multi-stage suspension preheater to first pass through the series on the rotary kiln side and another manner of causing the aforementioned material to first pass through the series on the calcining kiln side. That is to say, in the case that the powdery material is first allowed to pass through the series on the rotary kiln side, the function of this series is chiefly to preheat the powdery material, and the calcination is scanty, therefore the gas temperature and the partial pressure of carbon dioxide gas are both at a low level, as a result the re-carbonatation will scarcely occurs in the preheater. On the other hand, the function of the series on the calcining kiln side is chiefly the calcination, as a result a great deal of carbon dioxide gas will generate and its partial pressure will thus be higher and the temperature in the series will correspondingly be higher. Accordingly, in the preheater on this series side, there will occur adverse effects such as acceleration of the re-carbonatation and temperature rise of the preheater.

Inversely, in the case that the powdery material is first allowed to pass through the calcining series, the function of this series is chiefly to calcine the powdery material, though preheating is also somewhat carried out therein, and the partial pressure of carbon dioxide gas in the exhaust gas from the calcining kiln will be higher. However, since the finish of the calcination is carried out with the exhaust gas from the rotary kiln, the calcination of the powdery material in the series on the calcining kiln side is somewhat lowered. Therefore, conditions of the calcination are loose as much and the temperature of the exhaust gas will thus drop, so that the calcination of the back-flowed powdery material is small and its re-carbonatation in the preheater on this series side is inhibited to some extent. On the other hand, the function of the exhaust gas from the rotary kiln is mainly to calcine the powdery material, but the level of this calcination is low, the partial pressure of carbon dioxide gas will not be heightened, and a gas temperature is relatively low, therefore the re-carbonatation in this series is nothing but a little.

After all, when the gas combining system is compared synthetically with the gas parallel flow system, it is definite that the latter is somewhat more excellent in the thermal efficiency than the former.

As understood from the aforesaid statement, when the calcining apparatus comprising the combination of the conventional multi-stage suspension preheater and the calcining kiln is reviewed regarding points of heat exchange function, calcination function and re-carbonatation reaction, it can be concluded that the separate calcining kiln gas parallel flow system is most excellent.

However, this system contains the problem of an unbalance between the gas parallel flow paths, as mentioned above. That is to say, the exhaust gas from the calcining kiln carries a greater sensible heat than the exhaust gas from the rotary kiln, and it is difficult to restrain the sensible heat of the exhaust gas all over the apparatus to a minimum level even by adjusting the flow rate of the powdery material in each series, accordingly it is definite that the system is still poor in thermal efficiency. Further, when it is intended to raise the calcination degree of the powdery material, this unbalance will be increased. Furthermore, in the separate calcining kiln gas parallel flow system, the unbalances of a gas temperature and a carbon dioxide concentration tend to bring about the recarbonatation reaction of the powdery material, and any step of preventing the re-carbonatation is not taken in the system. In addition thereto, when the combustion-improving ratio is increased, or when coal which is lagging in combustion rate is employed in the calcining kiln, the sensible heat carried by the exhaust gas from the calcining kiln will become greater, which fact will lead to bad results in points of thermal efficiency, calcination degree and re-carbonatation all.

An object of this invention is to provide an epochally improved calcining apparatus for a powdery material comprising a combination of a multi-stage suspension preheater and a calcining kiln, by which apparatus the calcination degree of the powdery material can be heightened up to nearly 100%, the re-carbonatation of the powdery material flowed back with the gas can be prevented, the saving of a used fuel can be expected, and a crashed coal can be used as the fuel, and which apparatus is excellent in drive performance, is simple and is inexpensive.

This invention has the characteristics according to the characterising portions of claims 1 to 4.

According to this invention, the calcining kiln is separated from the rotary kiln, the two preheating serieses of Series I and Series II are employed, the gas combining pipe is disposed between Serieses I and II, whereby balancing a gas quantity, a gas-in-retaining heat quantity and a powdery material quantity between the two serieses can be accomplished, a residence time of the powdery material can be increased in calcinating sections of two stages, a portion of the powdery material can be caused to recycle through the calcinating sections, a calcination degree of the powdery material can be raised up to nearly 100%, a thermal efficiency can be improved, and optimum conditions can be suitably controlled. Further, according to this invention, there can be additionally combined a flow calcining device for burning a crashed coal as a fuel in a good thermal efficiency which the inventors of this invention have suggested separately, whereby an efficient operation can be carried out by the use of the crashed coal as a fuel which is lagging in combustion rate, an administration of operation is easy, and facilities are economical.

Still further, according to this invention, the calcining apparatus comprises the combination of the multi-stage suspension preheater and the calcining kiln, the latter is composed of a main calcining kiln separated from the rotary kiln and a sub-calcining kiln connected to the exhaust gas pipe extending from the rotary kiln, and the whole powdery material is caused to pass through the main calcining kiln and the sub-calcining kiln, whereby the heat exchange efficiency between the solid and the gas in the calcinating sections is heightened, a combustion quantity of the fuel in the three kilns of the rotary kiln, the main calcining kiln and the sub-calcining kiln can be set to optimum conditions, a calcination degree of the powdery material can be increased up to about 100%, and the fuel to be used can be saved. Moreover, when there is additionally combined a flow calcining device for calcining a crashed coal as the fuel in a good thermal efficiency which the inventors of this invention have suggested separately, even the crashed coal fuel can be employed efficiently.

Still further, according to this invention, the sub-calcining kiln or the calcining chamber may be disposed on the exhaust gas pipe extending from the rotary kiln, whereby $NO_x$ in the exhaust gas from the rotary kiln can be reduced in addition to the aforementioned effects, a pressure loss caused by a formed coating can be decreased much more than in the case of a conventional calcining apparatus, and the removal of the coating can be carried out with ease.

Still further, according to this invention, the powdery material flowed back to the preheater with the gas is forced to lead into a section having a low temperature on the side of the calcining kiln, though in the preheater there exists a high partial pressure of $CO_2$, i.e. a condition of bringing about the re-carbonatation in a prompt manner, whereby the rate of the re-carbonatation is lowered.

In other words, in the case of a conventional process, gases exhausted from the respective solid-gas separators on the calcining kiln side and the rotary kiln side are mixed with the materials at the exits of the solid-gas separators which are sited at one upper stages to carry out heat exchange, so that temperatures of the gases in the respective separators will become about 800°C and a little lower temperature than 700°C. Therefore, between a solid-gas separator and a solid-gas separator just above it, the re-carbonatation rate of the powdery material flowed back with the gas will be noticeably high on the calcining kiln side, but will be low on the rotary kiln side. Particularly, the exothermic heat resulted from the vigorous re-carbonatation on the calcining kiln side will further heighten the temperature of the exhaust gas in the second solid-gas separator from the bottom of the series on the above side, and at last the temperature of the exhaust gas in the uppermost solid-gas separator will be raised, which fact will render the recovery of heat low.

Still further, according to this invention, the materials collected by the third solid-gas separators from the bottoms of both the serieses are fed to an exit duct extending from a solid-gas separator on the calcining duct side and the resultant combined material is further mixed with the material about twice as much as and the gas as much as the above collected material, whereby the temperature of the gas in the second solid-gas separator from the bottom of the preheater on the calcining duct side can be lowered to about 700°C, though the partial pressure of $CO_2$ remains high. As a result, the re-carbonatation rate will be reduced, and the temperature rise caused by the exothermic heat will be thus inhibited to drop the temperature of the exhaust gas in the uppermost solid-gas separator. On the rotary kiln side, the temperature of the exhaust gas from the second solid-gas separator from the bottom inversely rises to about 750°C, but the partial pressure of $CO_2$ is low and the peak of the re-carbonatation rate lies in the vicinity of this temperature. Therefore, the re-carbonatation rate and the temperature rise caused by the exothermic heat merely increase by a minimal degree, so that the temperature of the exhaust gas from the uppermost solid-gas separator on the same side will scarcely rise.

The above-mentioned and other objects, features and advantages of this invention will become more apparent from the following description given with reference to the accompanying drawings, in which:

FIGS. 1 and 2 are flow sheets showing embodiments of a first invention with regard to this application;

FIGS. 3 and 4 are flow sheets showing embodiments of a second invention with regard to this application;

FIGS. 5 and 6 are flow sheets showing embodiments of a third invention with regard to this application;

FIG. 7 is a diagram showing relations of rate indexes of re-carbonatation with respect to temperatures of each gas having a certain partial pressure; and

FIGS. 8 and 9 are flow sheets showing embodiments of a fourth invention with regard to this application.

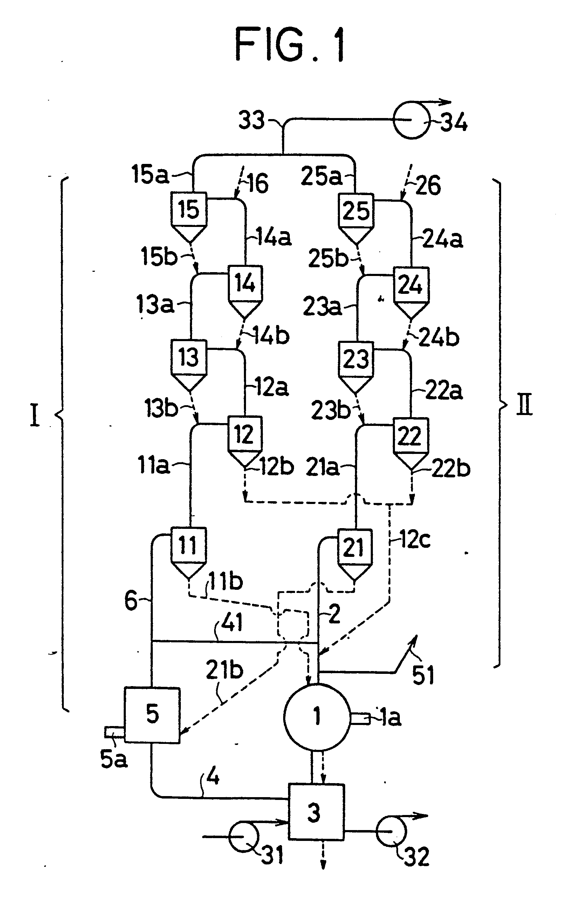

Referring now to FIG. 1 in which a flow sheet of the first invention with regard to this application is shown, reference numeral 1 is a rotary kiln, numeral 2 is an exhaust gas pipe extending from the rotary kiln, 3 is a cooling device for cooling a calcined material, 4 is a bleeding pipe extending from the cooling device, 5 is a calcining kiln and 6 is an exhaust gas pipe extending from the calcining kiln. In the drawing, the solid lines and the dotted lines represent passages for air and gases and flow paths of a powdery material, respectively.

This embodiment includes preheating systems of Series I and Series II and a gas carrying pipe for connecting these serieses.

Series I is composed of the calcining kiln 5 equipped with a fuel feeding device 5a and a multi-stage suspension preheater in which solid-gas separators 11, 12, 13, 14 and 15 connected to the exhaust gas pipe 6 extending from the calcining kiln 5 and risers 11a, 12a, 13a, 14a and 15a are combinedly stacked in a multistage form.

Series II comprises a multi-stage suspension preheater in which solid-gas separators 21, 22, 23, 24 and 25 connected to the exhaust gas pipe 2 extending from the rotary kiln and risers 21a, 22a, 23a, 24a and 25a are combinedly stacked in a multi-stage form.

Between the gas passages of Series I and Series II, there is provided a gas carrying pipe 41 for connecting a top of the calcining kiln 5 or the exhaust gas pipe 6 to the exhaust gas pipe 2. In addition to or in place of the gas carrying pipe 41, another gas carrying pipe, needless to say, may be provided between the risers 11a and 21a extending from the undermost solid-gas separators of Serieses I and II to connect both the serieses to each other.

Feed pipes 16, 26 for feeding the powdery material are fixed on gas inlet pipes 14a, 24a of the uppermost solid-gas separators 15, 25 in Serieses I and II, respectively. The passages for the powdery material extend downward from the separators 15, 14, 13 and 12 in Series I and from the separators 25, 24, 23 and 22 in Series II up to the second solid-gas separators 12 and 22 of Serieses I and II. Powdery material discharging passages 12b and 22b extending from the second solid-gas separators 12, 22 from the bottoms in Serieses I and II run into a combining duct 12c, which is connected to the exhaust pipe 2 extending from the rotary kiln. A powdery material discharging passage 21b extending from the undermost solid-gas separator in Series II is connected to the calcining kiln 5, and a powdery material discharging passage 11b extending from the undermost solid-gas separator in Series II is connected to the rotary kiln 1.

The calcining kiln 5 on the side of Series I is provided with a fuel feeding device 5a, serves to burn the fuel with the air of the bleed from the cooling device 3, and is separated from the rotary kiln 1. In this case, a flow calcining kiln in which a crashed coal can be used as the fuel may be utilized as the calcining kiln, and even in such a condition, an efficient calcination can be obtained.

Next, discussions will be had about the flow of gases and the powdery material in the apparatus according to this invention:

Air blown into the cooling device 3 by a pressure fan 31 which is attached to the device 3 is led into the rotary kiln 1 and the calcining kiln 5 to be utilized for combustion, a part of the air being discharged to the atmosphere by a fan 32.

The gas generated by the combustion in the calcining kiln 5 calcines the powdery material, and is led, together with a gas resulted from its calcination and the powdery material, into the solid-gas separator 11 and Series II separately through the exhaust gas carrying pipe 6 and the gas carrying pipe 41.

The gas discharged from the solid-gas separator 11 rises along Series I via the risers and the solid-gas separators alternatively in the order of 11a, 12, 12a, 13, 13a, 14, 14a, 15 and 15a, and is forwarded to a farther system through a duct 33 and a drawing electric fan 34.

The gas generated by the combustion of the fuel in the rotary kiln 1 is combined, in the exhaust gas pipe 2, with the exhaust gas forwarded through the gas carrying pipe 41 from the calcining kiln 5 in Series I. And the gas is then fed to the solid-gas separator 21, rises along Series II via the risers 21a, 22a, 23a, 24a and 25a and the solid-gas separators 22, 23, 24 and 25 alternatively, is combined in the duct 33 with the gas coming upward along Series I, and is discharged from the system through the drawing electric fan 34.

The powdery material is fed to tops of Serieses I and II through feeding pipes 16 and 26 separately, and the separated materials descend in parallel along the preheating serieses while carrying out the heat exchange with the gases, are discharged from the second solid-gas separators 12, 22 to the bottoms of the serieses, and are combined to each other, and the combined material is then fed to the exhaust gas pipe 2. A portion of the powdery material is calcined and is led into the calcining kiln 5 through the solid-gas separator 21. As for the powdery material exhausted with the gas from the calcining kiln 5, its portion is recycled to the exhaust gas pipe 2 through the gas carrying pipe 41, and its rest is separated from the gas in the solid-gas separator 11 and is led into the rotary kiln 1 through the passage 11b.

The powdery material led into the rotary kiln is calcined by a combustion device 1a fixed thereto, is cooled in the cooling device 3, and is then discharged from the series.

Although depending on operation conditions selected, when cement is used as the powdery material in this embodiment, the temperatures of the materials discharged from the solid-gas separators 12, 22 are about 750°C, the exhaust gas from the rotary kiln has a temperature of 900 to 1200°C, the temperature of the atmosphere in the calcining kiln 5 is about 830°C at a maximum, and the temperature of the exhaust gas from the calcining kiln is 870°C or less, and under these conditions the cement material is calcined up to approximately 100%.

The gas carrying pipe 41 permits causing a portion of the exhaust gas from the calcining kiln 5 to combine with the exhaust gas from the rotary kiln in order to provide supplementally Series II with heat, whereby the solid-gas heat exchange of the powdery material, which is prepared by combining powdery materials discharged from the solid-gas separators 12, 22, is accelerated in the last stage in Series II to improve thermal efficiency and to thereby increase the efficiency of the heat exchange all over Series II. Further, the gas carrying pipe permits the recycle of the powdery material with the gas through the channel of traveling members 41, 2, 21, 21b and 5, whereby the residence time of the powdery material in the calcining section is extended in order to achieve the enough heat exchange and calcination. The amount of the gas which passes through the gas carrying pipe 41 can be adjusted by setting a combustion-improving ratio to an optimum condition for maximizing the thermal efficiency all over the system, taking the calcination degree of the powdery material into consideration, and an adjusting device for adjusting the transit quantity of the gas therethrough may be optionally disposed on the gas carrying pipe 41.

A mass of the powdery material to be recycled is substantially proportional to a flow capacity of the gas carrying pipe 41, and can be optionally adjusted. The exhaust gas from the calcining kiln which is accompanied by the powdery material to be recycled and which has a high partial pressure of carbon dioxide gas is diluted with the exhaust gas from the rotary kiln which has a high temperature and a low partial pressure of carbon dioxide gas, therefore the calcination of the powdery material can be efficiently finished.

Since the calcining apparatus according to this invention can heighten the calcination degree of the powdery material up to about 100% by increasing the combustion-improving ratio, it is possible to miniaturize the rotary kiln 1 and to reduce a heat load. Conventionally, a sensible heat of the exhaust gas from the calcining kiln would increase and an unbalance between Serieses I and II would become great, but in the case of this embodiment the above unbalance can be eliminated completely by the function of the gas carrying pipe 41.

The gas carrying pipe also serves to uniformize each gas flow rate between Serieses I and II in the rear of the position where the gas carrying pipe is disposed and to thereby uniformize the heat exchange. Therefore, Serieses I and II can be built in the same shape and are interchangeable, and design, manufacture and fitting of the serieses are easy, which fact leads to reduction in a cost of the equipment and a maintenance cost. The drawing electric fan 34 can be jointly used for both the serieses, therefore the gas flow rate can easily be controlled and costs of equipment and power can be saved. The above uniformization of the flow rate of the powdery material between Serieses I and II permits requiring no intricate adjustment of the flow rate of the material, whereby an operation control can easily be stabilized advantageously.

The installation of the gas carrying pipe permits the operation of either series alone, whereby when there is a trouble at a local position, the suspension of the whole apparatus can be avoided, and at the starting of the apparatus, the heating-up all over the system can be accomplished by the only combustion device of the rotary kiln 1.

Further, even in the case that there is used a powdery material which tends to bring about a coating trouble attributable to alkalis, sulfur, chlorine, etc., and/or even in the case that owing to the employment of the fuel, an alkali by pass 51 is disposed to discharge a portion of the gas from the rotary kiln, a gas quantity and a heat exchange rate can be balanced between Serieses I and II.

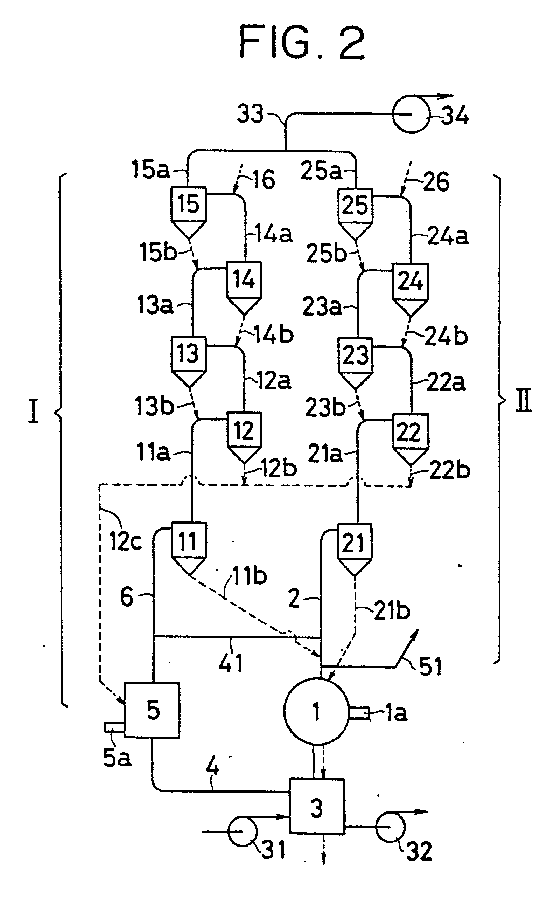

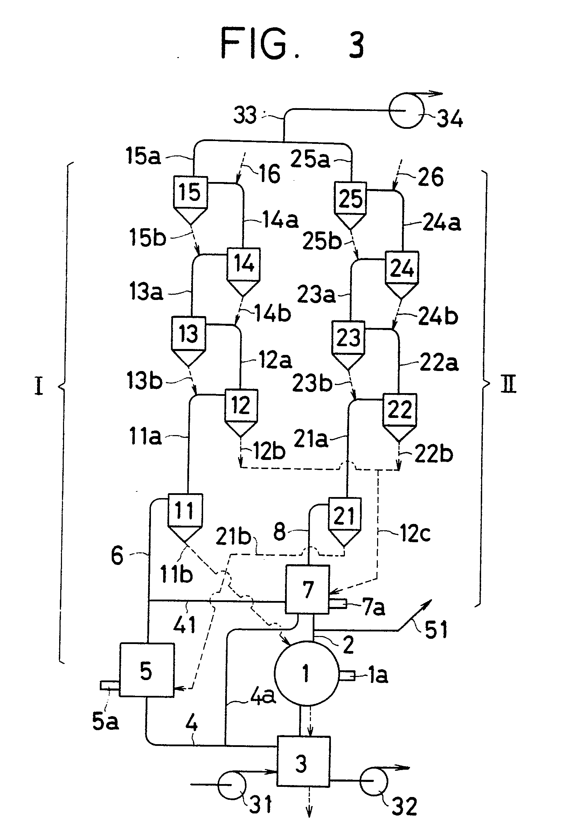

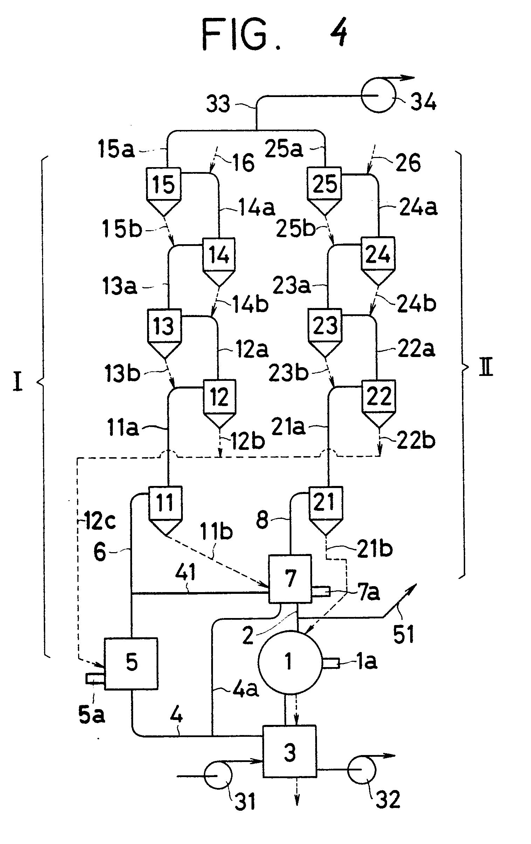

Referring now to FIG. 2 where another embodiment of the first invention is shown, a combining duct 12c for combining and carrying the powdery materials discharged from the second solid-gas separators 12, 22 from the bottoms in Serieses I and II is led into the calcining kiln, a powdery material carrying passage 11b extending from the undermost solid-gas separator in Series I is connected to the exhaust gas carrying duct 2 extending from the rotary kiln, and a powdery material carrying passage 21b extending from the undermost solid-gas separator in Series II is connected to the rotary kiln, and all the constitutions shown FIG. 2, except the above arrangements, are the same as in the embodiment shown in FIG. 1.

According to the embodiment exhibited in FIG. 2, the calcination of the powdery material can be substantially completed by calcinating finally the powdery material, the calcination of which has already been almost completed in the calcining kiln 5, with the aid of the exhaust gas from the rotary kiln which has a high temperature and a low partial pressure of carbon dioxide gas. The gas carrying pipe 41 allows the exhaust gas from the calcining kiln to flow therethrough, whereby the heat of the exhaust gas from the rotary kiln can be supplemented, the space where the solid and the gas are subjected to the heat exchange treatment can be expanded, and a gas flow and a retained heat are balanced between Serieses I and II. Except that a portion of the powdery material is recycled, this embodiment shown in FIG. 2 has the same functional effects as in the embodiment shown in FIG. 1.

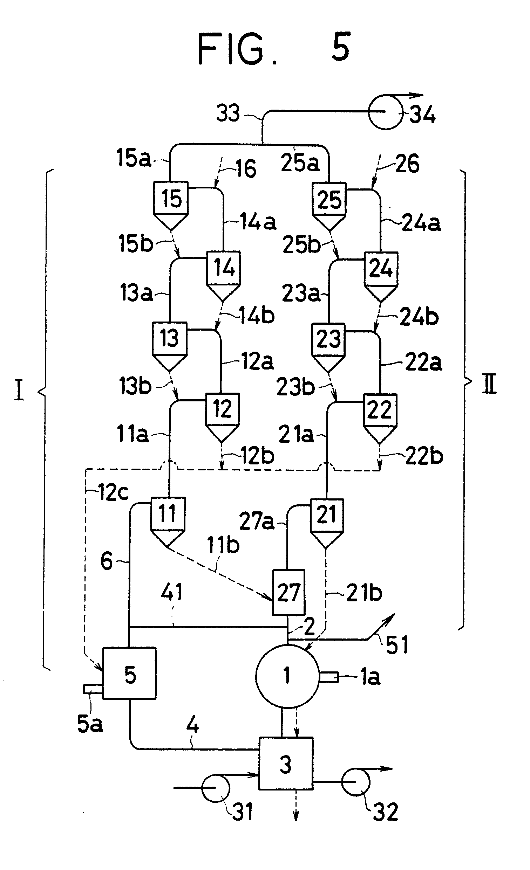

FIG. 3 shows an embodiment of the second invention of this application, which is the same as the embodiment of the above-mentioned first invention shown in FIG. 1 with the exception that a sub-calcining kiln 7 equipped with a feed device 7a for feeding a fuel thereto is interposed between the rotary kiln 1 and the solid-gas separator 21, and the gas carrying pipe 41, a bleeding pipe 4a extending from the cooling device and the combining pipe 12c for combining the powdery materials are connected to the sub-calcining kiln 7, which is further connected to the solid-gas separator 21 via an exhaust gas carrying pipe 8. Constitutions and reference numerals for members other than the above are the same as in the embodiment shown in FIG. 1 hence more detailed description will be omitted.

The gas generated by the combustion in the main calcining kiln 5 calcines the powdery material, and is led, together with the gas resulted from its calcination and the powdery material, into the solid-gas separator 11 and the sub-calcining kiln 7 or the exhaust gas carrying pipe 8 extending from the sub-calcining kiln, through the exhaust gas carrying pipe 6 and the gas carrying pipe 41.

The gas discharged from the solid-gas separator 11 rises along Series I via the risers and the solid-gas separators 11a, 12, 12a, 13a, 14, 14a, 15 and 15a, and is forwarded to a farther system through a duct 33 and a drawing electric fan 34.

The gas generated by the combustion of the fuel in the rotary kiln 1 is let into the sub-calcining kiln 7 and burns the fuel fed through a feeding device 7a with the aid of the bleed from the cooling device 3 to heat and calcine the powdery material fed to the sub-calcining kiln. And this gas is further combined with the gas coming from the main calcining kiln 5 in Series I through the gas carrying pipe 41, is led into the solid-gas separator 21 via the exhaust gas carrying pipe 8, rises along Series II via the risers and the solid-gas separators 21a, 22, 22a, 23, 23a, 24, 24a, 25 and 25a, is combined with the gas from Series I in the duct 33, and is discharged from the system through the drawing electric fan 34.

The powdery material is fed to tops of Serieses I and II through feeding pipes 16 and 26 separately in about equal volumes, and the separated materials descend in parallel along the serieses while carrying out the heat exchange with the gases therein, are discharged from the second solid-gas separators 12, 22 from the bottoms of the serieses, and are combined with each other, and the combined material is then fed to the sub-calcining kiln 7 to be partially calcined. Next, the powdery material is combined with the other powdery material coming with the gas from the main calcining kiln in Series I through the gas carrying pipe 41, and is led into the main calcining kiln 5 in Series I through the solid-gas separator 21 while making progress in the calcination.

FIG. 4 shows another embodiment of the second invention, which is the same as the embodiment shown in FIG. 3 with the exception that a traveling channel for allowing the powdery material to be calcined therein is different, and it corresponds to the embodiment shown in FIG. 2. In the embodiment shown in FIG. 4, the powdery material is led into the rotary kiln 1 via a combining duct 12c disposed in front of the undermost solid-gas separators of Serieses I and II, the main calcining kiln 5, the solid-gas separator 11 in Series I, the sub-calcining kiln 7 and the solid-gas separator 21 in Series II.

In this case, the calcination of the powdery material is first carried out in the main calcining kiln 5 and the finishing calcination is carried out in the sub-calcining kiln 7.

The calcination of the powdery material, the consumption of the fuel and the ease of the operation in this embodiment are not appreciably different from the embodiment shown in FIG. 3.

FIG. 5 shows an embodiment of the third invention of this application, which is the same as the embodiment of the first invention shown in FIG. 2 with the exception that a calcining chamber 27 is disposed between the rotary kiln 1 and the solid-gas separator 21 and is connected to the solid-gas separator 21 with the interposition of the riser 27a, and a powdery material carrying passage 11b is connected to the calcining chamber 27.

The calcining chamber 27 is an upright cylinder disposed in the middle of the exhaust pipe 2 extending from the rotary kiln 1, and has no fuel feeding device. Moreover, the calcining chamber 27 permits the increase in the residence time of the powdery material in order to carry out an enough heat exchange between the powdery material and the exhaust gas from the rotary kiln, and serves to heat the material, to finish the calcination and to drop a temperature of the exhaust gas from the rotary kiln. Further, the calcining chamber 27 can have a sufficiently great sectional area so that it may not be closed or clogged.

The calcining chamber 27 is constituted as follows: The calcining chamber is an upright cylinder which allows the exhaust gas from the rotary kiln to be led from below, and has the same inlet sectional area as that of the exhaust gas carrying pipe 2 extending from the rotary kiln. In this way, the gas rate of the exhaust gas from the rotary kiln is maintained at a sufficiently great level to prevent the powdery material fed to the calcining chamber from dropping along the pipe 2 and short passing to the rotary kiln. Further, the gas outlet sectional area of the calcining chamber, i.e., the sectional area of a riser 27a extending from the calcining chamber is narrowed down to provide a gas rate of ensuring that the powdery material is discharged from the calcining chamber with the gas and a collection efficiency of the solid-gas separator 21 is kept up. The calcining chamber which comprises an upright cylinder having the narrowed gas inlet and outlet, as mentioned above, functions to achieve a complete finishing calcination and to extend the residence time with the aim of an enough drop of the gas temperature.

Accordingly, the apparatus of this embodiment has a higher calcination degree of the powdery material and a more excellent thermal efficiency, as compared with a conventional calcining device. Further, since the sectional area of the calcining chamber is large, a coating trouble which will be described below can be eliminated.

Incidentally, the gas carrying pipe 41 allows a portion of the exhaust gas from the calcining kiln to flow toward the calcining chamber 27, so that the powdery material in the calcining chamber 27 is calcined completely with the aid of the flowing gas.

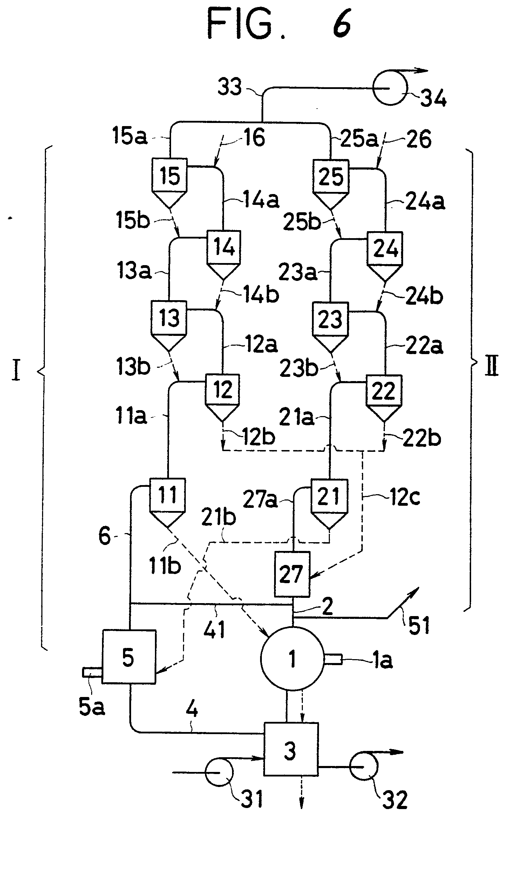

Referring now to FIG. 6 in which another embodiment of the third invention is shown, a combining duct 12c for combining the powdery materials separated in the solid-gas separators 12, 22 is connected to the calcining chamber 27, and a traveling channel for the powdery material is altered so that the material may be fed from the calcining chamber 27 to the rotary kiln 1 via the solid-gas separator 21, the calcining kiln 5 and the solid-gas separator 11. This embodiment corresponds to the embodiment of the first invention shown in FIG. 1.

The embodiment shown in FIG. 6 has the same functional effects as in the embodiment shown in FIG. 5, and additionally, since a portion of the powdery material travels through the calcining kiln 5, the gas carrying pipe 41, the calcining chamber 27, the riser 27a and the solid-gas separator 21, the residence time, in the calcining section, of the powdery material can be further extended so as to accomplish completely the calcination of the powdery material.

Incidentally, the gas duct 51 in FIGS. 5 and 6 is a known by-pass duct, and when the material and/or the fuel contains easily volatile and condensable substances such as compounds of alkalis, sulfur or chlorine and a coating trouble occurs due to them in the calcining chamber 27, the above-mentioned gas duct 51 serves to discharge such compounds with a portion of the exhaust gas from the rotary kiln out of the system.

According to this embodiment, when the above compounds (hereinafter referred to as condensable components) are removed from the system to get rid of the coating trouble, and when a portion of the exhaust gas from the rotary kiln is discharged from the system through the by-pass duct 51 and an unbalance resultantly occurs between Serieses I and II, the gas carrying pipe 41 and/or 42 permits the gas quantity in both the serieses to be equalized.

Manners, other than mentioned above, of avoiding the coating trouble caused by the condensable components will be described in the following, with regard to FIGS. 5 and 6:

As be known, the condensable components are taken in the system by the powdery material and/or the fuel and is forwarded to the rotary kiln, and a portion of the components is fixed to the calcined material and discharged from the system. However, the amount of the components which is discharged in such a manner is limited, and when the amount of the components taken in the system is in excess of a certain level, they will be accumulated in the system. In other words, the condensable components volatilize in the rotary kiln, and they are forwarded to the calcining device with the exhaust gas from the rotary kiln and condenses there. A portion of the components is fixed to the powdery material, and forwarded to the rotary kiln again and volatilize there. In this way, the recycle is established. Simultaneously, the rest of the components adhere, in the form of a coating rich in condensable components, to inner surfaces of the calcining apparatus, for example, inner walls of the exhaust gas carrying pipe 2 extending from the rotary kiln, the calcining chamber 27, the riser 27a, the solid-gas separator 21 and the riser 21a. The coating will grow with time, because a temperature of the gas in these members is within the range of a temperature at which the condensable components condense.

The calcining chamber of this invention is designed so that its sectional area may maintain an enough effective hollow space even when the coating is accumulated on the inner wall of the chamber, therefore a pressure loss at the time of the gas being running scarcely varies and the calcination of the powdery material in the chamber is not affected at all.

Accordingly, since the condensable components in the system almost condense and deposit on the inner wall of the calcining chamber in the form of the coating, a worker or operator can remove the deposited coating from the system by cleaning the chamber when out of operation of the apparatus. Further, in the case that the powdery material and/or the fuel takes a great deal of condensable components in the system, the work of removing the coating from the calcining chamber can be carried out efficiently when in operation of the apparatus, since the calcining chamber is adapted to have a large sectional area.

In the case that such a removing work is still insufficient, this invention can take advantageously another manner of discharging a portion of the exhaust gas leaving the rotary kiln from the system through the by-pass duct 51, as mentioned above.

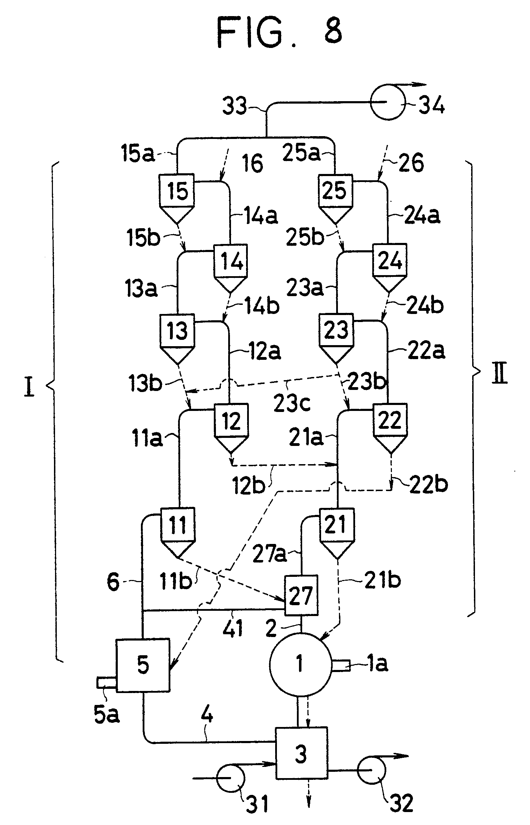

FIG. 8 exhibits an embodiment of the fourth invention, which is the same as the fourth invention shown in FIG. 5 with the exception that a powdery material carrying pipe 23c is disposed between the powdery material feeding pipes 13b and 23b and is adapted to connect thereto, and a powdery material carrying pipe 12b is connected to the riser 21a in Series II without connecting to the combining duct 12c, which is shown in FIG. 1, communicating with the powdery material carrying pipe 22b. The gas duct 51 which is shown in FIG. 5 is omitted in FIG. 8. Incidentally, the above-mentioned pipe 23c may be directly connected to the riser 11a extending to the solid-gas separator 12, instead of connecting to the pipe 13b.

The powdery material is fed to tops of Serieses I and II through the feeding pipes 16, 26 and the separated materials descend in parallel along the preheaters of the respective serieses up to the third solid-gas separators 13, 23 from the bottoms of the serieses. The powdery material discharged from the separator 13 and all or a portion of the powdery material discharged from the separator 23 are forwarded to the second solid-gas separator 12 from the bottom of Series I, and the mixed powdery material discharged from this separator 12 is led into the rotary kiln 1 via the second solid-gas separator 22 from the bottom of Series II, the calcining kiln 5, the undermost solid-gas separator 11 of Series I, the calcining chamber 27 and the undermost solid-gas separator 21 of Series II.

Owing to the above-mentioned constitution of the flow path for the powdery material, a gas temperature in the riser 11a extending to the second solid-gas separator 12 from the bottom of Series I can be dropped by means of a great amount of the powdery material, whereby the recarbonation of the powdery material flowed back, which would conventionally occur, can be restrained. It is most preferable that the whole of the powdery material is fed to the riser 11a, but this is not limited.

Further, the powdery material can carry out a solid-gas heat exchange while traveling through the solid-gas separators 12, 22 of Serieses I and II, a calcining kiln 5, the undermost solid-gas separator 11 of Series I, the calcining chamber 27 and the undermost solid-gas separator of Series II, whereby the calcination degree of about 100% can be achieved and the thermal efficiency can also be improved.

The gas carrying pipe 41 of this embodiment cooperates with the calcining chamber 27 and the powdery material carrying pipe 23c not only to accomplish the improvement in the heat exchange efficiency of the calcining apparatus, the perfect calcination of the powdery material and the prevention of the re-carbonation, but also to equalize the gas flow and the gas sensible heat of Series I to those of Series II.

The calcining apparatus of this embodiment is provided with the gas carrying pipe, the powdery material carrying pipe and the calcining chamber, therefore there can be perfectly achieved the calcination of the powdery material, be prevented the re-carbonation of the powdery material flowed back, and be improved the heat exchange efficiency, and the operation can easily be controlled, even in the case that the combustion-improving ratio of the calcining kiln 5 is heightened, or even in the case that a crushed coal which is lagging in combustion rate is employed as the fuel in the calcining kiln 5.

Referring now to FIG. 9 in which another embodiment of the fifth invention is shown, the traveling channel of the powdery material in FIG. 8 is altered so that the powdery material separated in the solid-gas separator 22 may be fed to the rotary kiln through a combining duct 22b extending from the solid-gas separator 22, the calcining chamber 27, the solid-gas separator 21, the calcining kiln 5 and the solid-gas separator 11.

The embodiment shown in FIG. 9 has about the same functional effects as in the embodiment shown in FIG. 8. In the embodiment shown in FIG. 9, however, a portion of the powdery material is recycled through the calcining kiln 5, the gas carrying pipe 41, the calcining chamber 27, the riser 27a and the solid-gas separator 21, therefore the residence time of the powdery material in the calcinating section can be extended to further calcine the powdery material to a complete degree, though the concentration of carbon dioxide gas in Series I is higher than in the embodiment shown in FIG. 8.

According to the calcining apparatus of this invention which is constituted as above, the following effects can be obtained:

(1) The powdery material can be calcined up to nearly 100% before fed to the rotary kiln.

(2) The gas flow rate and the gas sensible heat in Serieses I and II are equalized to each other, whereby streams of the powdery materials can go down along Serieses I and II in equal volumes.

Further, the devices of Serieses I and II can be manufactured in the same shape, one drawing electric fan is enough for operation, and facility investment, maintenance cost and operating cost can be minimized.

(3) This calcining apparatus can be operated with an only one preheater series, therefore the operation can be continued even at the time of a local repair or trouble, without suspending the whole facilities. Further, heating-up can be easily accomplished.

(4) Even when the exhaust gas from the rotary kiln is discharged from the system through the disposed by-pass duct to prevent a coating trouble in the case that alkalis, sulfur, chlorine and the like are included a lot in the powdery material and/or the fuel, a balanced operation is possible.

(5) The residence time of the powdery material in the calcination section is extended by sharing the calcination between the main calcining kiln and the sub-calcining kiln and by expanding thus the calcining section having a temperature suitable for the calcination, whereby the ideal heat exchange in the calcining section can be achieved, the calcination degree of the powdery material can be improved to nearly 100%, and the sensible heat carried by the exhaust gas can be minimized, which permits saving the consumption of the fuel.

(6) The sub-calcining kiln can denitrate $NO_x$ in the exhaust gas from the rotary kiln and can contribute to the prevention of environmental pollution.

(7) The coating resulted from the condensation of condensable components in the preheater is controlled so as to occur almost in the calcining chamber having a large sectional area, whereby the pressure lose caused by the formed coating can be reduced more greatly than in a conventional calcining apparatus, and a working of removing the coating can be facilitated.

(8) It is possible to restrain the re-carbonation of the powdery material flowed back with the gas and to prevent the deterioration in the thermal efficiency. As a result of the prevention of the re-carbonation according to this invention, the consumption of the fuel reduces as much as $12.6—25.7.10^3$ Joule/Kg (3 to 6 Kcal/Kg) of clinker, by this functional effect itself alone.

(9) When the calcining apparatus is combined with the calcining kiln invented by the inventors of this invention, a crashed coat or the like can be used as the fuel in a good efficiency.

**Claims**

1. Calcining apparatus for a powdery material, wherein the powdery material passes before feeding to a rotary kiln through multistage suspension preheaters and a calcining device, comprising a first preheater series (I) with solid-gas separators (15, 14, 13, 12, 11) arranged one below the other and connected by gaspipes (14a, 13a, 12a, 11a), the undermost separator being connected by an exhaust gas pipe (6) to the calcining kiln (5), and a second preheater series (II) with solid-gas separators (25, 24, 23, 22, 21) connected by gaspipes (24a, 23a, 22a, 21a), the undermost separator being connected by an exhaust gas pipe (2) to the rotary kiln (1) and further comprising feeding devices (16, 26) for feeding the powdery material to said series, said separators being provided with powdery material discharging passages (15b, 14b, 13b, 25b, 24b, 23b) each passage being connected to a gas pipe (13a, 12a, 11a, 23a, 22a, 21a) leading to the next separator of a series, which series are connected with one another in a plurality of stages, characterized by a gas carrying pipe (41) connecting the exhaust gas pipes (2, 6) of the first and second series, and by passages connecting the downstream ends of the powdery material streams of both said series and feeding the powdery material to the rotary kiln (1) via

(I) the exhaust gas pipe (2) of the second series, the last separator (21) of the second series, the calcining kiln (5) and the last separator (11) of the first series; or via

(II) the calcining kiln (5), the last separator (11) of the first series and, respectively, the gas carrying pipe (41) connecting the first and second series, the exhaust gas pipe (2) of the second series and the last separator (21) of the second series.

2. Calcining apparatus for a powdery material, wherein the powdery material passes before feeding to a rotary kiln through multistage suspension preheaters and a calcining device, comprising a first preheater series (I) with solid-gas separators (15, 14, 13, 12, 11) arranged one below the other and connected by gaspipes (14a, 13a, 12a, 11a), the undermost separator being connected by an exhaust gas pipe (6) to the calcining kiln (5), and a second preheater series (II) with solid-gas separators (25, 24, 23, 22, 21) connected by gaspipes (24a, 23a, 22a, 21a), the undermost separator being connected by an exhaust gas pipe (2) to the rotary kiln (1) and further comprising feeding devices (16, 26) for feeding the powdery material to said series, said separators being provided with powdery material discharging passages (15b, 14b, 13b, 25b, 24b, 23b) each passage being connected to a gas pipe (13a, 12a, 11a, 23a, 22a, 21a) leading to the next separator of a series, which series are connected with one another in a plurality of stages, characterized by a subcalcining kiln (7) interposed between the last separator (21) of the second series and the rotary kiln (1), a gas carrying pipe (41) connecting the exhaust gas pipe of the first series (6) with the subcalcining kiln (7), the powdery material discharging passes (12b, 22b) of the penultimate separators of each said series (12, 22), and by passages connecting the downstream ends of the powdery material stream or both said series in such a way that the powdery material is fed to the rotary kiln (1) via

(I) the subcalcining kiln (7), the last separator (21) of the second series, the calcining kiln (5) and the last separator (11) of the first series, or via

(II) the calcining kiln (5), the last separator (11) of the first series and, respectively, the gas carrying pipe (41) connecting the first and second series, the subcalcining kiln (7) and the last separator (21) of the second series.

3. Calcining apparatus for a powdery material, wherein the powdery material passes before feeding to a rotary kiln through multistage suspension preheaters and a calcining device, comprising a first preheater series (I) with solid-gas separators (15, 14, 13, 12, 11) arranged one below the other and connected by gas pipes (14a, 13a, 12a, 11a), the undermost separator being connected by an exhaust gas pipe (6) to the calcining kiln (5), and a second preheater series (II) with solid-gas separators (25, 24, 23, 22, 21) connected by gaspipes (24a, 23a, 22a, 21a), the undermost separator being connected by an exhaust gas pipe (2) to the rotary kiln (1) and further comprising feeding devices (16, 26) for feeding the powdery material to said series, said separators being provided with powdery material discharging passages (15b, 14b, 13b, 25b, 24b, 23b) each passage being connected to a gaspipe (13a, 12a, 11a, 23a, 22a, 21a) leading to the next separator of a series, which series are connected with one another in a plurality of stages, characterized by a gas carrying pipe (41) connecting the exhaust gas pipes (2, 6) of the first and second series, a calcining chamber (27) without a fuel feeding device, interposed between the last separator (21) of the second series and entry to the second series of said gas carrying pipe (41) connecting the first and second series, the powdery material discharging passages (12b, 22b) of the penultimate separators of said series (12, 22), and by passages connecting the downstream end of the powdery material streams of both said series in such a way that the powdery material is fed to the rotary kiln (1) via

(I) the calcining chamber (27), the last separator (21) of the second series, the calcining kiln (5) and the last separator (11) of the first series, or via

(II) the calcining kiln (5), the last separator (11) of the first series and, respectively, the gas carrying pipe (41) connecting the first and second series, the calcining chamber (27) and the last separator (21) of the second series.

4. Calcining apparatus for a powdery material, wherein the powdery material passes before feeding to a rotary kiln through multistage suspension preheaters and a calcining device, comprising a first preheater series (I) with solid-gas separators (15, 14, 13, 12, 11) arranged one below the other and connected by gaspipes (14a, 13a, 12a, 11a), the undermost separator being connected by an exhaust gas pipe (6) to the calcining kiln (5), and a second preheater series (II) with solid-gas separators (25, 24, 23, 22, 21) connected by gaspipes (24a, 23a, 22a, 21a), the undermost separator being connected by an exhaust gas pipe (2) to the rotary kiln (1) and further comprising feeding devices (16, 26) for feeding the powdery material to said series, said separators being provided with powdery material discharging passages (15b, 14b, 13b, 25b, 24b, 23b) each passage being connected to a gaspipe (13a, 12a, 11a, 23a, 22a, 21a) leading to the next separator of a series, which series are connected with one another in a plurality of stages, characterized by a calcining chamber (27) without a fuel feeding device, interposed between the last separator (21) of the second series and the rotary kiln (1), a gas carrying pipe (41) connecting the exhaust gas pipe (6) of the first series with the calcining chamber (27), a powdery material carrying pipe (23c) for connecting the powdery material discharging passages (13b, 23b) of the third separators (13, 23) from below of the first and second series, a powdery material discharging passage (12b) of the penultimate separator (12) of the first series, connected to the gas pipe (21a) leading to the penultimate separator (22) of the second series, and by passages connecting the downstream ends of the powdery material streams of both said series in such a way that the combined powdery material is fed to the rotary kiln (1) via

(I) the calcining chamber (27), the last separator (21) of the second series, the calcining kiln (5) and the last separator (11) of the first series, or via

(II) the calcining kiln (5), the last separator (11) of the first series and, respectively, the gas carrying pipe (41) connecting the first and second series, the calcining chamber (27) and the last separator (21) of the second series.

## Patentansprüche

1. Kalzinier- oder Brennvorrichtung für pulverförmige Stoffe, die vor der Einspeisung in einen Drehofen mehrere mehrstufige Vorwärmer und eine Kalziniereinrichtung durchlaufen, bestehend aus einem einer ersten Vorwärmereihe (I) mit Feststoffgas-Abscheidern (15, 14, 13, 12, 11), die einer unter dem anderen angeordnet und durch Gasrohre (14a, 13a, 12a, 11a) verbunden sind, und aus einer zweiten Vorwärmerreihe (II) mit Feststoffgas-Abscheidern (25, 24, 23, 22, 21), die durch die Gasrohre (24a, 23a, 22a, 21a) verbunden sind, wobei der unterste Abscheider durch ein Abgasrohr (2) mit dem Drehofen (1) verbunden ist, und darüber hinaus bestehend aus Speiseeinrichtungen (16, 26) zum Einspeisen der pulverförmigen Stoffe in diese Reihen, wobei die Abscheider mit Durchgängen (15b, 14b, 13b, 25b, 24b, 23b) zur Abgabe der pulverförmigen Stoffe versehen sind, von denen jeder an einem Gasrohr (13a, 12a, 11a, 23a, 22a, 21a) liegt, das zu einem nächsten Abscheider einer Serie führt, und die Serien in mehreren Stufen miteinander verbunden sind, gekennzeichnet durch ein Gas führendes Rohr (41), das an den Abgasrohren (2, 6) der ersten und zweiten Reihe liegt, und durch Durchgänge, die die abwärts liegenden Enden der pulverförmigen Stoffströme beider Reihen verbinden und die pulverförmigen Stoffe dem Drehofen (1) über

(I) das Abgasrohr (22) der zweiten Reihe, den letzten Abscheider (21) der zweiten Reihe, den Kalzinier- oder Brennofen (5) und den letzten Abscheider (11) der ersten Reihe; oder über

(II) den Kalzinier- oder Brennofen (5), den letzten Abscheider (11) der ersten Reihe und jeweils über das die erste und zweite Reihe verbindende Gas führende Rohr (41), das Abgasrohr (2) der zweiten Reihe und den letzten Abscheider (21) der zweiten Reihe zuführt.

2. Kalzinier- oder Brennvorrichtung nach Anspruch 1, gekennzeichnet durch einen Unterkalzinier- oder -brennofen (7) zwischen dem letzten Abscheider (21) der zweiten Reihe und dem Drehofen (1), ein Gas führendes Rohr (41), das das Abgasrohr der ersten Reihe (6) mit dem Unterkalzinier- oder -brennofen (7) verbindet, Durchgänge (12b, 22b) der vorletzten Abscheider jeder Reihe (12, 22) zum Austragen der pulverförmigen Stoffe und durch Verbindungsgänge, durch die die stromabwärts liegenden Enden der Ströme der pulverförmigen Stoffe oder beide Reihen derart verbunden werden, daß die pulvervörmigen Stoffe dem Drehofen (1) über

(I) den Unterkalzinier- oder -brennofen (7), den letzten Abscheider (21) der zweiten Reihe, den Kalzinier- oder Brennofen (5) und den letzten Abscheider (11) der ersten Reihe oder über

(II) den Kalzinier- oder Brennofen (5), den letzten Abscheider (11) der ersten Reihe und jeweils über das die erste und zweite Reihe verbindende Gas führende Rohr (41), den Unterkalzinier- oder -brennofen (7) und den letzten Abscheider (21) der zweiten Reihe zugeführt werden.

3. Kalzinier- oder Brennvorrichtung nach einem der beiden vorhergehenden Ansprüche 1 oder 2, gekennzeichnet durch ein Gas führendes Rohr (41), das die Abgasrohre (2, 6) der ersten und zweiten Reihe verbindet, eine Kalzinier- oder Brennkammer (27), ohne Brennstoffzuführvorrichtung, zwischen dem letzten Abscheider (21) der zweiten Reihe und dem Eingang zur zweiten Reihe des die erste und zweite Reihe verbindenden Gas führenden Rohres (41), Durchgänge (12b, 22b) der vorletzten Abscheider jeder Reihe (12, 22) zum Austragen der pulverförmigen Stoffe und durch Verbindungsgänge, durch die die stromabwärts liegenden Enden der Ströme der pulverförmigen Stoffe oder beide Reihen derart verbunden werden, daß die pulverförmigen Stoffe dem Drehofen (1) über

(I) die Kalzinier- oder Brennkammer (27), den letzten Abscheider (21) der zweiten Reihe, den Kalzinier- oder Brennofen (5) und den Abscheider (11) der ersten Reihe oder über

(II) den Kalzinier- oder Brennofen (5), den letzten Abscheider (11) der ersten Reihe und jeweils über das die erste und zweite Reihe verbindende Gas führende Rohr (41), die Kalzinier- oder Brennkammer (27) und den letzten Abscheider (21) der zweiten Reihe zugeführt werden.

4. Kalzinier- oder Brennvorrichtung nach einem der vorhergehenden Ansprüche 1 bis 3, gekennzeichnet durch eine Kalzinier- oder Brennkammer (27), ohne Brennstoffzuführvorrichtung, zwischen dem letzten Abscheider (21) der zweiten Reihe und dem Drehofen (1), ein das Abgasrohr (6) der ersten Reihe mit der Kalzinier- oder Brennkammer (27) verbindendes Gas führendes Rohr (41), ein pulverförmige Stoffe führendes Rohr (23c) zum Verbinden der die pulverförmigen Stoffe abführenden Durchgänge (13b, 23b) der zweiten Abscheider (13, 23) von unterhalb der ersten und zweiten Reihe, einen Durchgang (12b) des vorletzten Abscheiders (12) der ersten Reihe zum Austragen der pulverförmigen Stoffe sowie verbunden mit dem Gasrohr (21a), das zum vorletzten Abscheider (22) der zweiten Reihe führt, und durch Verbindungsgänge, durch die stromabwärts liegenden Enden der Ströme der pulverförmigen Stoffe oder beide Reihen derart verbunden werden, daß die vereinigten pulverförmigen Stoffe dem Drehofen (1) über

(I) die Kalzinier- oder Brennkammer, den letzten Abscheider (21) der zweiten Reihe, den Kalzinieroder Brennofen (5) und den letzten Abscheider (11) der ersten Reihe oder über

(II) den Kalzinier- oder Brennofen (5), den letzten Abscheider (11) der ersten Reihe und das die erste und zweite Reihe verbindende Gas führende Rohr (41), die Kalzinier- oder Brennkammer (27) und den letzten Abscheider (21) der zweiten Reihe zugeführt werden.

**Revendications**

1. Appareil de calcination pour une matière en poudre, dans lequel la matière en poudre traverse, avant d'être amenée dans un four rotatif, des préchauffeurs à suspension à plusieurs étages et un dispositif de calcination, comprenant une première série de préchauffeurs (I) ayant des séparateurs solide-gaz (15, 14, 13, 12, 11) disposés l'un au-dessous de l'autre et reliés par des conduits de gaz (14a, 13a, 12a, 11a), le séparateur le plus inférieur étant relié par un conduit de gaz d'échappement (6) au four de calcination (5), et une seconde série de préchauffeurs (II) ayant des séparateurs solide-gaz (25, 24, 23, 22, 21) reliés par des conduits de gaz (24a, 23a, 22a, 21a), le séparateur le plus inférieur étant relié par un conduit de gaz d'échappement (2) au four rotatif (1) et comprenant, de plus, des dispositifs d'alimentation (16, 26) pour amener la matière en poudre auxdites séries, lesdits séparateurs étant munis de passages d'évacuation de la matière en poudre (15b, 14b, 13b, 25b, 24b, 23b), chaque passage étant relié à un conduit de gaz (13a, 12a, 11a, 23a, 22a, 21a) conduisant au séparateur suivant d'une série, lesquelles séries sont reliées l'une à l'autre en une pluralité d'étages, caractérisé par un conduit de transport de gaz (41) reliant les conduits de gaz d'échappement (2, 6) des première et seconde séries, et par des passages reliant les extrémités aval des courants de matière en poudre des deuxdites séries et amenant la matière en poudre dans le four rotatif (1) via

I — le conduit de gaz d'échappement (2) de la seconde série, le dernier séparateur (21) de la seconde série, le four de calcination (5) et le dernier séparateur (11) de la première série; ou via

II — le four de calcination (5), le dernier séparateur (11) de la première série et, respectivement, le conduit de transport de gaz (41) reliant les première et seconde séries, le conduit de gaz d'échappement (2) de la seconde série et le dernier séparateur (21) de la seconde série.

2. Appareil de calcination pour une matière en poudre, dans lequel la matière en poudre traverse, avant d'être amenée dans un four rotatif, des préchauffeurs à suspension à plusieurs étages et un dispositif de calcination, comprenant une première série de préchauffeurs (I) ayant des séparateurs solide-gaz (15, 14, 13, 12, 11) disposés l'un au-dessous de l'autre et reliés par des conduits de gaz (14a, 13a, 12a, 11a), le séparateur le plus inférieur étant reliée par un conduit de gaz d'échappement (6) au four de calcination (5), et une seconde série de préchauffeurs (II) ayant des séparateurs solide-gaz (25, 24, 23, 22, 21) reliés par des conduits de gaz (24a, 23a, 22a, 21a), le séparateur le plus inférieur étant relié par un conduit de gaz d'échappement (2) au four rotatif (1) et comprenant de plus des dispositifs d'alimentation (16, 26) pour amener la matière en poudre auxdites séries, lesdits séparateurs étant munis de passages d'évacuation de la matière en poudre (15b, 14b, 13b, 25b, 24b, 23b), chaque passage étant relié à un conduit de gaz (13a, 12a, 11a, 23a, 22a, 21a) conduisant au séparateur suivant d'une série, lesquelles séries sont reliées l'une à l'autre en une pluralité d'étages, caractérisés en four de calcination auxiliaire (7) disposé entre le dernier séparateur (21) de la seconde série et le four rotatif (1), un conduit de transport de gaz (41) reliant le conduit de gaz d'échappement (6) de la première série au four de calcination auxiliaire (7), les passages d'évacuation de la matière en poudre (12b, 22b) des avant-derniers séparateurs de chaque série (12, 22), et par des passages reliant les extrémités aval des courants de matière en poudre des deuxdites séries de telle façon que la matière en poudre est amenée dans le four rotatif (1) via:

I — le four de calcination auxiliaire (7), le dernier séparateur (21) de la seconde série, le four de calcination (5) et le dernier séparateur (11) de la première série, ou via

II — le four de calcination (5), le dernier séparateur (11) de la première série, et, respectivement, le conduit de transport de gaz (41) reliant les première et seconde séries, le four de calcination auxiliaire (7) et le dernier séparateur (21) de la seconde série.

3. Appareil de calcination pour une matière en poudre, dans lequel la matière en poudre traverse, avant d'être amenée dans un four rotatif, des préchauffeurs à suspension à plusieurs étages et un dispositif de calcination, comprenant une première série de préchauffeurs (I), ayant des séparateurs solide-gaz (15, 14, 13, 12, 11) disposés l'un au-dessous de l'autre et reliés par des conduits de gaz (14a, 13a, 12a, 11a), le séparateur le plus inférieur étant relié par un conduit de gaz d'échappement (6) au four de calcination (5), et une seconde série de préchauffeurs (II) ayant des séparateurs solide-gaz (25, 24, 23, 22, 21) reliés par des conduits de gaz (24a, 23a, 22a, 21a), le séparateur le plus inférieur étant relié par un conduit de gaz d'échappement (2) au four rotatif (1) et comprenant de plus des dispositifs d'alimentation (16, 26) pour amener la matière en poudre auxdites séries, lesdits séparateurs étant munis de passages d'évacuation de la matière en poudre (15b, 14b, 13b, 25b, 24b, 23b), chaque passage étant relié à un conduit de gaz (13a, 12a, 11a, 23a, 22a, 21a) conduisant au séparateur suivant d'une série, lesquelles séries sont reliées l'une à l'autre en une pluralité d'étages, caractérisé par un conduit de transport de gaz (41) reliant les conduits de gaz d'échappement (2, 6) des première et seconde séries, une chambre de calcination (27) sans dispositif d'alimentation de combustible, disposée entre le dernier séparateur (21) de la seconde série et l'entrée vers la seconde série dudit conduit de transport de gaz (41) reliant les première et seconde séries, les passages d'évacuation de la matière en poudre (12b, 22b) des avant-derniers séparateurs desdites séries (12, 22), et par des passages reliant les extrémités aval des courants de matière en poudre des deuxdites séries de telle façon que la matière en poudre est amenée dans le four rotatif (1) via

I — la chambre de calcination (27), le dernier séparateur (21) de la seconde série, le four de calcination (5) et le dernier séparateur (11) de la première série, ou via

II — le four de calcination (5), le dernier séparateur (11) de la première série et, respectivement, le conduit de transport de gaz (41) reliant les première et seconde séries, la chambre de calcination (27) et le dernier séparateur (21) de la seconde série.

4. Appareil de calcination pour une matière en poudre, dans lequel la matière en poudre traverse, avant d'être amenée dans un four rotatif, des préchauffeurs à suspension à plusieurs étages et un dispositif de calcination, comprenant une première série de préchauffeurs (I) ayant des séparateurs solide-gaz (15, 14, 13, 12, 11) disposés l'un au-dessous de l'autre et reliés par des conduits de gaz (14a, 13a, 12a, 11a), le séparateur le plus inférieur étant relié par un conduit de gaz d'échappement (6) au four de calcination (5), et une seconde série de préchauffeurs (II) ayant des séparateurs solide-gaz (25, 24, 23, 22, 21) reliés par des conduits de gaz (24a, 23a, 22a, 21a), le séparateur le plus inférieur étant relié par un conduit de gaz d'échappement (2) au four rotatif (1) et comprenant de plus des dispositifs d'alimentation (16, 26) pour amener la matière en poudre auxdites séries, lesdits séparateurs étant munis de passages d'évacuation de la matière en poudre (15b, 14b, 13b, 25b, 24b, 23b), chaque passage étant relié à un conduit de gaz (13a, 12a, 11a, 23a, 22a, 21a) conduisant au séparateur suivant d'une série, lesquelles séries sont reliées l'une à l'autre en une pluralité d'étages, caractérisé par une chambre de calcination (27) sans dispositif d'alimentation de combustible, disposée entre le dernier séparateur (21) de la seconde série et le four rotatif (1), un conduit de transport de gaz (41) reliant le conduit de gaz d'échappement (6) de la première série à la chambre de calcination (27), un conduit de transport de matière en poudre (23c) pour relier les passages d'évacuation de la matière en poudre (13b, 23b) des troisièmes séparateurs (13, 23) à partir de la partie inférieure des première et seconde séries, un passage d'évacuation de la matière en poudre (12b) de l'avant-dernier séparateur (12) de la première série, relié au conduit de gaz (21a) conduisant à l'avant-dernier séparateur (22) de la seconde série, et par des passages reliant les extrémités aval des courants de matière en poudre des deuxdites séries de telle façon que la matière en poudre combinée est amenée dans le four rotatif (1) via

I — la chambre de calcination (27), le dernier séparateur (21) de la seconde série, le four de calcination (5) et le dernier séparateur (11) de la première série, ou via

II — la chambre de calcination (5), le dernier séparateur (11) de la première série et, respectivement, le conduit de transport de gaz (41) reliant les première et seconde séries, la chambre de calcination (27) et le dernier séparateur (21) de la seconde série.

# FIG. 1

# FIG. 2

# FIG. 3

0 082 802

# FIG. 4

4

# FIG. 5

# FIG. 6

# FIG. 7

# FIG. 8

# FIG. 9